# EUROPEAN PATENT SPECIFICATION

(11) **EP 1 859 186 B1**
(45) Date of publication and mention of the grant of the patent: **28.07.2010**
(21) Application number: 06723446.8
(22) Date of filing: 15.03.2006
(51) Int. Cl.: F16L 5/04, F16L 5/14

(54) **FIRE RESISTING SYSTEM AND METHOD FOR PROVIDING SUCH SYSTEM**
FEUERBESTÄNDIGES SYSTEM UND VERFAHREN ZUR BEREITSTELLUNG EINES DERARTIGEN SYSTEMS
SYSTEME RESISTANT AU FEU ET PROCEDE POUR UN TEL SYSTEME

(30) Priority: 16.03.2005 EP 05075630; 23.03.2005 EP 05075695
(43) Date of publication of application: 28.11.2007
(73) Proprietor: Beele Engineering B.V., 7122 NZ Aalten (NL)
(72) Inventor: BEELE, Johannes Alfred, NL-7122 Nz Aalten (NL)
(74) Representative: HOFFMANN EITLE
(86) International application number: PCT/EP2006/002373
(87) International publication number: WO 2006/097290

(56) References cited:
- EP-A- 0 534 563
- WO-A-01/09538
- WO-A-03/067136
- DE-A1- 2 809 463
- NL-C1- 1 019 909
- US-A- 4 086 736
- US-A- 4 548 853
- US-A- 4 666 164
- US-A- 4 901 488
- US-A- 20030 137 112
- US-A1- 2004 231 880

## Description

The invention is related to a transit system for incorporation in a construction element that divides two compartments, comprising a conduit through which at least one pipe extends from one of the two compartments to the other of the two compartments and into which heat can be conducted.

Such a transit system is known from ships and other off-shore applications such as oil rigs. These transit systems are seen as unwelcome necessities in such a construction. After all, pipes for, for instance, water distribution and water waste systems, air conditioning systems, hydraulic and pneumatic control, sprinkler etc. need to be extending throughout such a construction, even though this entails introducing "weak spots" in the separation of the compartments. Such weak spots do not manifest themselves in the mechanical strength of the construction but much more in the undesired transport of physical phenomena throughout the structure. One of these physical phenomena is the occasion of a fire which needs to be confined to only one area as long as possible, not only to allow for control and extinguishing the fire, but also to provide time for people present in compartments near to the fire for reaching a safe distance from the fire before the fire expands. To prevent smoke and/or fire to pass through the transit from one compartment to another, the transit is usually provided with material that closes the transit, at least for some time, when the transit is exposed to heat due to a fire. Such transit systems are often referred to as "pipe penetrations".

EP 0 534 563 B1 discloses a conduit in which a fire resistant and heat expandable rubber sheet is wrapped around the pipe. A wire may be tied around the sheet which is wrapped around the pipe, to ensure that the wrapped sheet remains its tight position around the pipe. A remaining part of the conduit may be filled with fire resistant and heat expandable rubber sleeves. The rubber sleeves and sheets together and as installed are often referred to as a sealing system. NL 1019909 describes that the heat expandable rubber sheet may also in a helical fashion be wrapped around the pipe. This system has in many aspects proved to be superior in comparison with alternative sealing systems such as for instance formed by casting into the transit a compound that solidifies or sealing systems composed of rubber blocks. With the former, shrinkage and/or corrosion may occur; the latter needs tightening and causes therefore many engineering problems. It must be borne in mind that these problems relate to relaxation of the rubber that may occur over time, loosening the sealing. A tight fitting also means radial pressure on the pipe which causes in the long run a reduction of the pipe's diameter when the pipe is made of plastic and therefore subject to creep-related phenomena. Both relaxation and creep require continuous monitoring of the sealing integrity as, even after renewed tightening, the phenomena continue to take place.

Installation of the sealing system disclosed in EP 0 534 563 B1 can still be too time consuming and too laborious. The number of sheets wrapped around the pipe, the thickness of these sheets, the number of wrappings and the interspacing left between the pipes covered by wrapped sheets is very specific and time consuming. Flexibility on the construction site is limited and there is a probability that mistakes are made.

The sizes of the conduits, and the number and sizes of pipes extending through these conduits may differ enormously for a number of pipe penetrations. To allow for these differences, large stocks of both sheets and sleeves are required. Missing sheets or sleeves, could lead to a delay in the installation or an incomplete installation and therefore these stocks need to be carefully monitored when installation of these sealing systems progresses during the building of a construction such as a ship or an oil rig.

Pipes extending through such a conduit sleeve may be used for transport of water, gas or may be used for guiding for instance electrical or optical cables, from one compartment to another. Conventionally, these pipes are made of metal. However, nowadays also plastic pipes comprising glass-fibre reinforced materials are more commonly used. In general it applies that the material of which the (service) pipes are made allow for conduction of heat.

When one side of the transit system is exposed to heat due to a fire, the pipe extending into the conduit at that side will supply heat to the inner space of the conduit. As heat expandable rubber sheets are wrapped around the pipe, these heat expandable rubber sheets are efficiently heated. When heated, these wrapped sheets start expanding in a radial direction as well as into a direction from which the heat is supplied. The heat expandable rubber sleeves will also become hot and will also expand. A solid rubber mass will form within the conduit sleeve at the side exposed to the heat. The conduit sleeve will consequently be closed off by the rubber mass to avoid spread of fire and smoke. This mass will expand towards the direction from which the heat is supplied.

Previously, heat only entered the conduit sleeve via the pipe or pipes which extended from the side exposed to fire into the conduit. Entrance of heat through material of which the conduit is made, was often inhibited by a thermally insulating lining provided against the outer wall of the conduit and the construction in which the conduit is incorporated. Most often this entails a steel construction. However, nowadays, thermally insulating lining is not always applied around the conduit and consequently heat can be conducted through conduit material from an outside to an inside of the conduit sleeve. It follows that heat can be supplied via at least two routes to the inner space of the conduit. The first route is the supply via the pipes extending into the conduit and a second route is the supply of heat to the inner space of the conduit via the thermally conductive material out of which the conduit is made. As heat may be supplied via two routes, heat may be supplied very rapidly to the inner space of the conduit sleeve. These conditions are often found in off-shore constructions and vessels, where construction materials are made of metal, i.e. a heat conducting material. In constructions other than off-shore constructions and vessels, like for instance onshore constructions, entrance of heat via the second route, is often much less taking place, if occurring at all.

A sealing system known from the prior art as described in EP 0 534 563 B1, comprising sheets wrapped around the pipes and sleeves inserted in the remaining part of the conduit sleeve, is not optimised for a situation in which heat is supplied via the two routes as outlined above. A result is that the heat expandable material expand to such an extent that material expands outwardly of the conduit, becomes unsupported by the conduit and may fall out of the conduit, causing for instance a risk of igniting other material.

WO 03/067136 A1 discloses a bushing arrangement for sealing a passage of a cable, a pipe, a conduit or the like through and opening in a wall, and is considered to represent the closest prior art.

It is an object of the present invention to reduce at least one of the problems mentioned above while remaining the functional requirements of the transit system.

This object is reached with a transit system that is as defined in appended claim 1. As the fire resistant and heat expandable rubber members used for filling up the pipe-free part of the inner cross-sectional volume, are similar, stockage of these heat expandable rubber members is much less dependant on a difference between a number of transit systems in which these fire resistant and heat expandable rubber members need to be used.

As the fire resistant and heat expandable rubber members are freely insertable in the conduit, the installation of these members in the conduit sleeve is much less time consuming, and much less laborious. The rubber members are substantially evenly distributed. After all, there is no cross-sectional part, such as a ring-shaped cross-sectional part around each pipe, that is to be supplied with these rubber members in a much higher density than elsewhere in the cross-sectional volume.

Also, mistakes are less likely to occur, given the straightforward and simple installation of the rubber members.

Surprisingly, it has turned out that also with this even distribution of fire resistant and heat expandable rubber members, a solid rubber mass can be formed, when the rubber members are subjected to heat, in that situation fully closing off the conduit sleeve.

As indicated above, as the pipe-free part is being filled up with rubber members and as at least one of the pipes, and preferably each of the pipes, is free from being coaxially surrounded by a single one of the rubber members, the rubber members are substantially evenly distributed over that part.

This even distribution is much more appropriate for a heat supply to the inner space of the conduit sleeve via at least two different routes. As two routes are available for heat supply, the rubber members are still efficiently heated up in case of fire, closing off rapidly enough the conduit sleeve. A transit system according to the invention has passed fire safety tests according to international regulations and has been certified.

It has further been shown that with a transit system according to the invention the transit length does not need to be as long as the transit length used for transit systems known in the prior art. A reduction of the length of the transit implies a reduction of the length of the sleeve or coaming. This on its turn implies a significant reduction in weight of the transit of enormous interest to the shipbuilding industry. A conduit sleeve in a transit system according to the invention may have a length of 200 mm to meet the requirements achieved by a transit system known of the prior art and having a length of 250 mm. This example shows that a weight reduction of 20% may be feasible for one transit. This contributes for vessels to an enormous weight reduction, as each vessel is normally equipped with hundreds to thousands of transits.

The weight reduction and shorter length of the transit system allow thus also for a more economic operation of a vessel.

Not only the length of the conduit can be reduced in comparison to the length used for a conduit of the prior art, also the length of the rubber members can be reduced in an equal way and to an equal extent.

Often a pipe needs to extend in a direction that is different from the direction into which the pipe extends within a conduit. Pipes extend preferably closely along a wall, deck, ceiling or floor, as in that case the pipe does not inconveniently cross space of a compartment. A bend in a pipe is therefore preferably situated close to a construction element such as a wall, deck, ceiling or floor. Short transits, allow for relatively short bends where redirection of the pipe is required. Thus short transits allow for a 90° bending of the pipe beyond the penetration close to the partition, resulting in saving space and intimately material.

In an embodiment of a transit system according to the invention each of the rubber members extends substantially in a direction parallel to a longitudinal direction of the at least one pipe. This has the advantage that the rubber members can easily be applied in the conduit sleeve. Furthermore the members can be applied such that on either end of the conduit sleeve a sufficient and equal amount of heat expandable rubber is provided by installation from only one side. Finally, such members can easily be produced by for instance an extrusion process or a moulding process.

Preferably, each member has a rotational position obtainable by rotating that member around its axis which extends in a longitudinal direction of that member, the rotational position of each member being independent of any of the neighbouring members of that member. During installation no time needs to be spent on assuring that the rotational positions of each member is in correspondence with a predetermined rotational position that may for instance be dependent on a rotational position of neighbouring members.

It is possible that in an embodiment in the inner cross-sectional volume a part of an outside of each of the at least one pipe is along a longitudinal direction free from contact with any of the rubber members. This has the advantage that there is a space along the pipe into which the heat expandable rubber can expand. In other words, a volume around the pipe is not too densely filled with heat expandable rubber, and expansion is unlikely to lead to a situation in which high expansion forces force expanding rubber members for instance out of the conduit sleeve.

It further applies that the rubber members are such that the rubber parts together are unable to form in an unexpanded condition a rubber sleeve that narrowly fits to any of the at least one pipe. This ensures that a ring-shaped volume around the pipe will not be too densely filled with heat expandable rubber and/or providing contact with the complete outside of the pipe.

It may apply that in the inner cross-sectional volume a part of the inner wall of the conduit is along a longitudinal direction free from contact with any of the rubber members. So, also close to the inner wall of the conduit sleeve is enough space available for the expanding rubber to expand into.

The rubber members are such that the rubber members together are unable to form in an unexpanded condition a rubber lining that closely covers in the inner cross-sectional volume the endless inner wall of the conduit. In such an embodiment it is therefore not possible that accidentally space close to the inner wall of the conduit sleeve is completely occupied by rubber before expansion occurs.

Each of the rubber members has a tubular shape. This has the advantage that each of the rubber members has inherently space into which the rubber can expand when heated. This space is namely available within the tube.

It is preferable that at least one of the rubber members has a cylindrical shape. Such a shape has the advantage that it is symmetrical with respect to its axis. In other words there is no need to spend time on getting the rotational position right when installing these rubber members. Furthermore, rubber members having a cylindrical shape will, when stacked together or bundled together in a conduit, inherently allow for space between them. Also when such members are aligned against an inner wall of the conduit or against an outer part of a pipe, a part along a longitudinal direction of the inner wall and a part along a longitudinal direction of that outer part are inherently free from contact with rubber parts. Installation in the preferred way, allowing for an even distribution and for space into which the rubber can expand when heated, will thus occur naturally.

It is possible that the plurality of similar rubber members comprise two types of rubber members. Even though the types are similar, little differences between the rubber members may be possible, allowing for combining rubber members having, for instance, mutually exclusive properties. The differences are such that for installation in a conduit sleeve no predetermined ratio is required for the number of members of one type and the number of members of another type. In other words, members of one type can without major problems replace one or more members of another type.

It is possible that the two types differ in dimensions. Remaining unoccupied space in the inner cross-sectional volume may, especially when a large part of that cross-sectional volume has already been filled with rubber members, not have a dimension into which a type like the type of the already placed members would fit. In such a situation it may be advantageous that the remaining space is filled up with a rubber member having different dimensions. It is still possible, and possibly preferable, that the members of each types have similar dimensions in longitudinal direction.

In an embodiment of a transit system according to the invention it is possible that at at least one free end of the conduit an end cross-sectional volume is substantially completely surrounded by the inner wall of the conduit sleeve and is filled up with a fire resistant sealant. This ensures that after filling the inner cross-sectional volume with rubber members as outlined above, the remaining spaces into which the rubber can expand when heated, is protected against the entrance of moisture, reducing the chance of corrosion within the transit. By applying the sealant a smoke tight barrier is already available before the expandable rubber members expand. Such a fire resistance sealant can easily be applied. a fire resistant sealant may be like a heat resisting and/or liquid repellent material as disclosed in EP 0 534 563 B1.

In an embodiment of a transit system according to the invention it is possible that at at least one free end of the conduit an end cross-sectional volume is substantially surrounded by the inner wall of the conduit and is filled up with a watertight sealant. This is especially advantageous when the division between the two compartments have to be watertight and/or gastight. When such a sealant is applied in both end cross-sectional volumes of the conduit, moisture cannot enter the inner cross-section volume and corrosion can be prevented. Note that the sealant can be applied such that a strong adhesive strength is obtained between the sealant and the pipes and between the sealant and the inner wall of the conduit. In practise there is no need to open up the transit to inspect for possible corrosion. Such monitoring mary normally be required to check whether gas leakage out of the pipe due to for instance corrosion of the pipe has occurred. So far, such monitoring has been needed. After all, if such corrosion and leakage were to occur in a transit, a gastight transit may become explosive. A gas and watertight sealant applied on both ends of the conduit can now make such time-consuming opening up of the transit unnecessary. Also the application of a fire resistant sealant on one end and a water and gastight sealant on the other end, has proved to provide full fire safety and integrity, when the fire-resistant sealant is also a water and gastight sealant. As a result neither maintenance work, nor monitoring work needs to be focussed on pipe-segments in transits.

It is also possible that one end cross-sectional volume of the conduit is filled up with a watertight sealant while another end cross-sectional volume of the conduit is filled up with a fire resistant sealant. This may be of use in LNG-tankers in which both leakage of gas and propagation of fire should be prevented by a transit system according to the invention.

It is further possible in an embodiment of a transit system according to the invention that between the end cross-sectional volume and between the inner cross-sectional volume an intermediate cross-sectional volume is filled up with an electrically conductive rubber product. In such an embodiment an effective short-cut may be provided between the metal substantially plate shaped construction element and the ducted pipe, if the thermally conductive conduit sleeve is also electrically conductive, which is usually the case. Hence, propagation of electromagnetic signals along the pipe, is effectively attenuated. When the metal plate shaped construction element is part of a Faraday cage surrounding a compartment, the pipe entering such a shielded space cannot perforate the protective screen provided, if this embodiment of a transit system according to the invention is applied. The conductivity of the electrically conducting rubber situated between the pipe and the conduit sleeve, ensures that the pipe becomes part of the Faraday cage.

The at least one pipe comprises a plurality of pipes. The plurality of pipes comprises at least one metal pipe and at least one plastic pipe. The rubber members will, when heated, expand and crush the plastic pipe. Any opening created by a plastic pipe that is softened by the heat will be filled up by the expanding rubber members. A transit system according to the invention may thus be used for "multiple pipe penetration". Especially when a transit system can be used for pipes of plastic and at the same time for pipes of metal and/or pipes with different diameters, major advantages for the construction can be achieved. Such a situation is often referred to as "mixed multiple pipe penetrations". It should also be borne in mind that a system according to the invention is capable of coping with different thermal expansions of the different pipes. The rubber members can easily be placed such that one or some of the rubber members act as an element that separates the pipes so that galvanic corrosion as a consequence of contact between pipes of different metals can be prevented. Linear and/or axial vibrations can easily be absorbed by a system according to the invention. One transit for different types of pipes saves much space, installation time and welding costs, in comparison with a situation wherein for each type of pipe a separate transit system is required. Anther major advantage of a transit system according to this embodiment of the invention is the reduction of the necessary numbers of conduit sleeves, allowing for much lighter constructions.

The invention is also related to a method for providing in a transit system, across a metal substantially plate shaped construction element that is situated between two compartments and comprises a conduit sleeve through which at least one pipe extends from one of the two compartments to the other of the two compartments, a system that acts as a barrier resisting propagation of fire and possibly smoke, gasses and water through the transit system.

The invention is further described with reference to the drawings. In the drawings:
Fig. 1 shows schematically a cross-section of a first transit system ;
Fig. 2 shows schematically a cross-section of a second transit system ;
Fig. 3 shows a frontal view of a cross-section of a transit system according to the invention;
Fig. 4 shows schematically a cross-section of a fourth transit system.

In the drawing, like parts have like references.

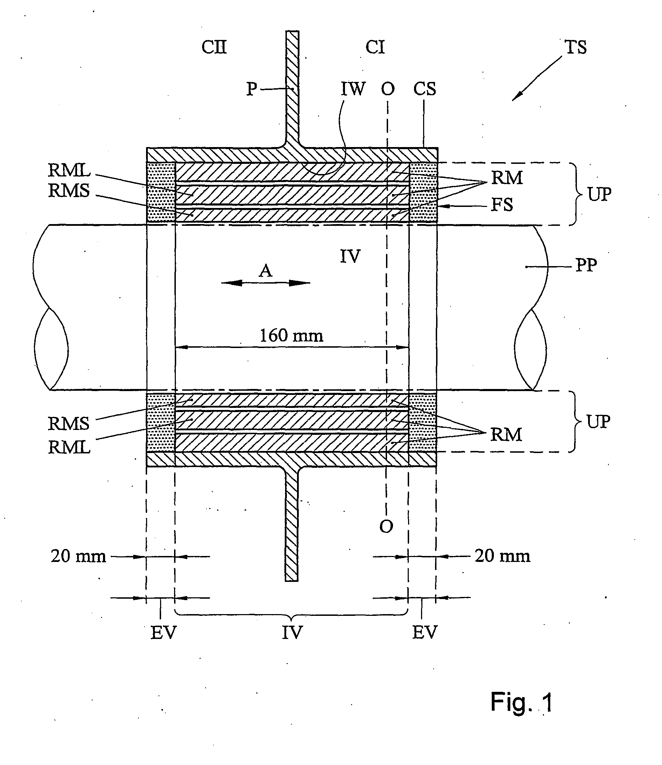

Fig. 1 shows schematically a cross-section of a transit system TS. The transit system TS is incorporated in a metal substantially plate shaped construction element P. This plate shaped construction element P is situated between the two compartments CI, CII and divides as such these two compartments I, II. The plate shaped construction element may for instance be part of a bulkhead, a wall or a deck in or on a ship or another construction that substantially is constructed of metal such as steel. The transition system comprises a conduit, in this example a conduit sleeve CS, made of a material which is in this example thermally conductive so that heat can be conducted through sleeve material between an inside and an outside of the sleeve. The conduit sleeve CS may be made of metal and may be welded into an opening of the plate P.

Although in this example shown, the conduit is incorporated in a metal substantially plate shaped construction element, it is also possible to incorporate the conduit in for instance a concrete wall or a separation made of any other material.

It is further conceivable that the conduit is made of a material that is not a good heat conductor, such as a ceramic material.

If heat will enter the conduit via only one of the routes outlined above, for instance only via pipes which extend through the conduit, the response of the heat expandable rubber members is still such that the conduit is satisfactorily closed off.

Although the example shows a simple and straightforward shape of the conduit, namely a sleeve, any shape of the conduit is possible. Instead of a sleeve the conduit may for instance be a coaming.

The transit system further comprises a pipe PP which extends through the conduit sleeve CS from one of the two compartments CI, CII to the other of the two compartments CI, CII. An endless inner wall IW of the conduit sleeve CS defines an inner cross-sectional volume IV. The term "endless" refers to the feature that the inner wall is closed in itself between end parts of the conduit, like a cylindrical wall. The inner cross-sectional volume IV is composed of a pipe-free part UP which is unoccupied by the pipe PP and a pipe-occupied part that is occupied by the pipe PP. The pipe may be a metal pipe, a pipe made of a glass-fibre-reinforced material or any other material conducting heat. The pipe may also be of a plastic. In that case it is in accordance with the invention that another pipe also extends through the conduit and that this pipe is of a material that conducts heat. The transit system TS further comprises a plurality of similar fire resistant and heat expandable rubber members RM with which that part UP of the inner cross-sectional volume IV is filled up. As can be seen in the figures, it applies that at least one of the pipes extending through the conduit is free from being coaxially surrounded by a single one of the rubber members. Preferably, each of the pipes extending through the conduit is free from being coaxially surrounded by a single one of the rubber members. The rubber members RM are substantially evenly distributed over that part UP. It may apply that the substantially even distribution relates to a manner of positioning the rubber members in the unoccupied part such that the positioning is unrelated to a predetermined pattern. In other words, the rubber members may be applied randomly while filling up the unoccupied part with the rubber members RM.

Although the sleeves are shown to be symmetrically positioned within the conduit, this is in either direction (axially of radially) not necessarily the case.

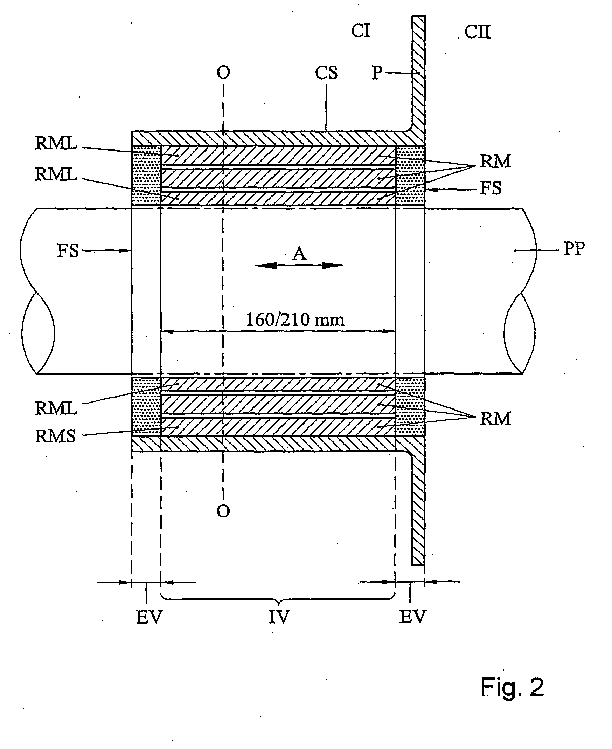

Fig. 2 is almost identical to Fig. 1. In Fig. 2 and end of the conduit sleeve CS is connected to the substantially plate shaped construction element P whereas in Fig. 1 a position in the middle of the conduit sleeve CS is connected to the substantially plate shaped construction element P.

Such a conduit may be asymmetrically positioned with respect to the wall or deck and may be bolted or welded to the wall or deck.

Each of the rubber members RM extend substantially in a direction parallel to a longitudinal direction of the pipe PP. The longitudinal direction is indicated by arrow A.

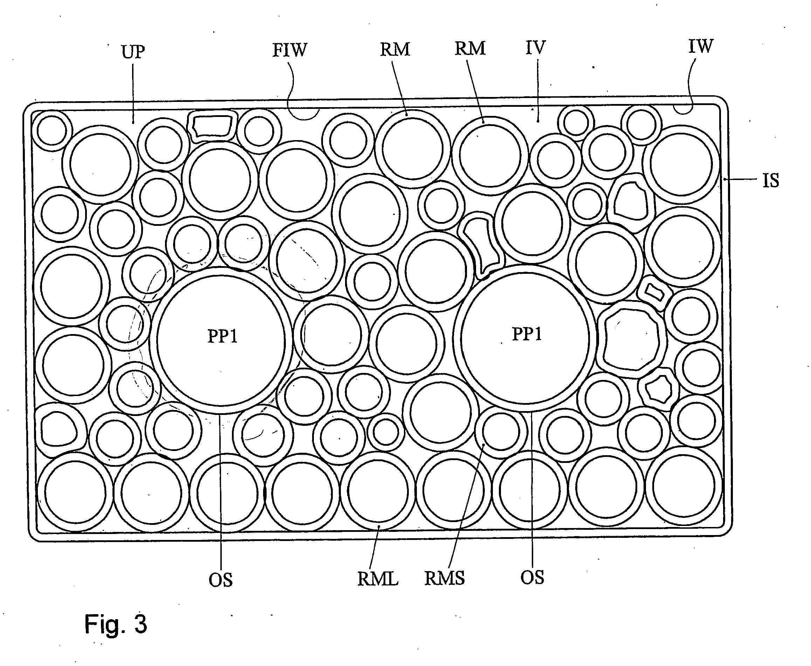

Fig. 3 shows a cross-section of a third embodiment of a transit system TS according to the invention. The cross-section is of a different transit system then the transit system shown in Fig. 1 and in Fig. 2. Although the transit systems of Fig. 1 and Fig. 2 are not identical to the transit system shown in Fig. 3, Fig. 1 and Fig. 2 show as indicated by line O-O a likely position of a cross-section of which a frontal view is shown in Fig. 3. Fig. 3 shows a frontal view as seen when viewing along a direction into which the pipe PP extends.

In Fig. 3, a conduit sleeve is shown through which two pipes PP1 and PP2 extend. The inner cross-sectional volume IV is defined by the endless inner wall IW of the conduit sleeve CS. As shown the inner cross-sectional volume IV is composed of a pipe-free part UP which is unoccupied by the pipe P1, PP2 and a pipe-occupied part which is occupied by pipes PP1 and PP2. As shown, the unoccupied part UP is filled up with a plurality of similar fire resistant heat expandable rubber members. Each of these rubber members is made of a heat expandable rubber. Each of the pipes extending through the conduit is free from being coaxially surrounded by a single one of the rubber members. As a result these rubber members RM are evenly distributed over the part UP that is unoccupied by the pipes. The members extend in a longitudinal direction that coincides in Fig. 3 with a direction that is normal to the plane in which the drawing is presented.

Each rubber member RM has a rotational position obtainable by rotating that member around its axis which extends in the longitudinal direction of that member. The rotational position of each member is independent of any of the neighbouring members of that member. This is clearly shown in Fig. 3. In the inner cross-sectional volume, a part of an outside OS of each of the pipes PP1, PP2 is in a longitudinal direction free from contact with any of the rubber members RM. The rubber members RM are such that the rubber members RM together are unable to form in an unexpanded condition a rubber sleeve that narrowly fits to any of the pipes PP1, PP2. In other words, each of the rubber members has a form that excludes formation of a rubber sleeve that narrowly fits coaxially around any of the pipes, on the basis of a number of these members, when the rubber members are in an unexpanded condition. In line herewith, each member may have a cylindrical form. Even if the rubber members RM themselves are squeezed against each other and squeezed against one of the pipes PP1, PP2, the shape of the rubber members still allow for a space between the rubber members and the pipe at certain positions along a tangential direction of the pipe PP1, PP2.

In the inner cross-sectional volume IV, a part of the inner wall IW of the conduit sleeve CS is in a longitudinal direction free from contact with any of the rubber members RM. Such a part is referred to by FIW. It applies that the rubber members RM are also such that the rubber members together are unable to form, in an unexpanded condition, a rubber lining that closely covers the inner wall in the inner cross-sectional volume. In other words, each of the rubber members has a form that excludes the formation of such a lining on the basis of a combination of a member of these rubber members. Again, in line herewith each member may have a cylindrical form.

As shown in Figure 3, it applies that the rubber members are distributed randomly over the pipe-free part UP of the cross-sectional volume IV.

As shown in the figures, the rubber members RM may have a tubular shape. The rubber members RM may in particular have a cylindrical shape. It may in fact be the case that the rubber members RM all have the same shape. It is possible though that the plurality of rubber members comprise two types of rubber members. It is for instance possible that a member of one type and a member of another type differ in dimensions. This is clearly shown in all the figures. In Fig. 3 these two different types of rubber members are indicated by RML and RMS. Preferably, the members of each type have similar dimensions in the longitudinal direction. The members may have similar dimensions, independent of the type.

As shown in Fig. 1 and 2, at at least one free end of the conduit sleeve an end cross-sectional volume EV is substantially surrounded by the inner wall of the conduit sleeve CS and is filled up with a fire resistant sealant FS. Such a fire resistant sealant may be based on a silicon compound. This may be a single component silicon compound. Such a fire resistant sealing may also be water repellent, have a high bonding strength and may be UV and ozone resistant. Instead of a fire resistant sealant a watertight sealant may be applied. Such a watertight sealant is known as under the trade name DRIFIL and is commercially available of CSD International B.V. or BEELE ENGINEERING B.V. EP 0 534 563 B1 also describes such a sealant as a heat resisting and/or liquid repellent material. Preferably, the end cross-sectional volume EV has a thickness of preferably about 5-20 mm, if the transit system concerns only a fire rated sealing. For a water- and gas-tight sealing system a thickness of about 20 mm is preferable. It is possible that the inner cross-sectional volume IV has a "thickness" in a range of 80-160 mm, so that a total length of the conduit sleeve is about 200 mm. These dimensions may be chosen differently for specific applications.

Those skilled in the art will on the basis of routine experiments be able to establish the preferred "thickness" for meeting specific requirements. Such experiments often need to be done anyway for obtaining certificates for use of the transit system according to the invention.

As shown in Fig. 3, a part of the inner cross-sectional volume that is unoccupied with the pipes PP1, PP2, is filled up more or less randomly with the rubber members RM. As the heat expandable rubber of which the rubber members RM are made, can be such that thermal expansion leads to a drastic increase in volume of the rubber even up to five or even ten times its original volume, it is not necessary that the inner cross-sectional volume is very densely filled up with the rubber members RM. In fact it is even preferable that in a situation wherein the rubber is not exposed to heat, some space is unoccupied by rubber, so that space remains available for expanding into, when the rubber is heated up. It is possible to have rubbers which expand, when heated up to temperatures in excess of 200 C°, up to five or ten times their original volume. However, also lower expansion rates are possible. Such rubber members are commercially available from CSD International BV or BEELE ENGINEERING B.V. and are known under the trade name RISE. The expansion is at least partly a result of the addition of graphite to the rubber and a homogenization process that takes place under exposure to high temperatures. It will be clear that the heat expandable rubber is a rubber that expands also from uncompressed condition. The rubber employed is preferably non-intumescent and does not form a dense smoke when expanding. Such rubber members may have an oxygen-index of above 80%, meaning that 80% of the surrounding should comprise oxygen before ignition occurs. The rubber members RM may have the shape of a sleeve with for instance a length of 80, 160 or 210 mm wide depending on the application and the required specifications. The inner and outer diameters of the sleeves may be chosen such that optimal filling of the inner cross-sectional volume of the conduit sleeve is likely and such that closing off the conduit sleeve when the members expand due to excessive heat, occurs rapidly enough. The skilled person is capable oaf determining the optimal dimensions via routine experiments.

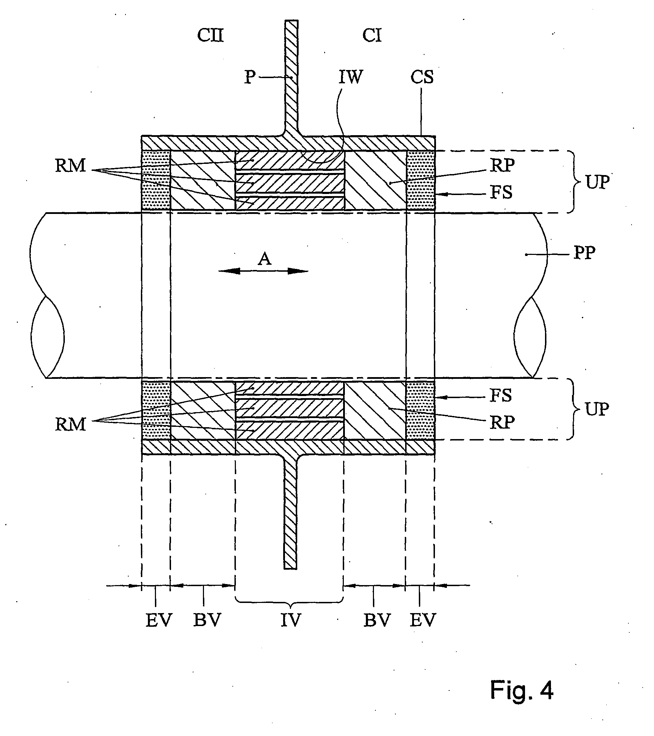

Fig. 4 shows a cross-section of a fourth embodiment of a transit system according to the invention. The cross-section shown in Fig. 4 is very similar to the cross-section shown in Fig. 1. In Fig. 4 however, between the end cross-sectional volume EV and between the inner cross-sectional volume IV an intermediate cross-sectional volume BV is filled up with an electrically conductive rubber product RP. Such electrically conductive plastic and/or rubber may comprise a tape. It is however also possible that the electrically conductive plastic and/or rubber comprises a sealing putty. Preferable the sealing putty is based on a silicon compound. The electrically conductive rubber may comprise a flexible rubber, that is for instance deformable by hand. It is possible that the electrically conducting plastic and/or rubber product comprises a product having a predetermined shape. Such rubber products are also commercially available from CSD International B.V. and are known under the trade name CONDUCTON. The intermediate cross-sectional volume may on either end have a thickness of preferably about 20-40 mm.

As shown in Fig. 3, a plurality of pipes may extend through the conduit sleeve. One pipe may be a metal pipe, and another pipe may be a plastic pipe. It is possible that at least one of the rubber members RM act as an element that separates the pipes.

Although it is very well possible that the conduit sleeve, usually made of steel, is welded to the metal substantially plate shaped construction element P, it is also possible that a much shorter conduit is provided on the plate shaped construction element and that the conduit sleeve suitable for filling with the described rubber members RM is formed by that short conduit and an extension conduit. Such an extension conduit may for instance be two longitudinal halves of a conduit sleeve. The halves may be inserted in the short conduit and may for instance be welded or bolted together and/or to the short conduit by spot welding.

Such extension conduits may also be used for existing pipe transit systems. As such these extension conduits provide when filled with the rubber member more thermal insulation, a larger length of the transit and a longer effective "working time" when a fire occurs.

A transit system according to the invention may be formed using the following method. A metal substantially plate shaped construction element as situated between the two compartments may be provided. This construction element may comprise a conduit sleeve through which at least one pipe extend from one of the two compartments to the other of the two compartments. A system that acts as a barrier resisting propagation of fire through the transit system may be provided. This comprises in particular filling up a part of the inner cross-sectional volume of the conduit sleeve that is surrounded by an endless inner wall and unoccupied with one or more pipes, with a plurality of fire resisted and heat expandable rubber members RM. These rubber members are substantially randomly distributed in the unoccupied part of the cross-sectional volume. Having positioned these rubber members, it is possible that either end cross-sectional volumes of the conduit sleeves are filled up with a fire resistant sealant (not shown in the figures). As shown in Fig. 3, it is possible that a rubber member is somewhat squeezed in between other rubber members. It is also possible that some remaining open spaces are to small to be filled by another rubber member. This is no problem, given the expansion of the rubber members when heated up.

It will be clear from the above that in all embodiments of the invention at least one of the pipes extending through the conduit is free from being coaxially surrounded by a single rubber member. Preferably, all pipes are free from being coaxially surrounded by a single one of the rubber members.

The transit system may be part of an off-shore construction or vessel.

The invention is by no means limited to the above described embodiments. It is possible that both the pipe and the rubber members have a cross-sectional shape that differs from the cylindrical shape. It is possible that instead of the fire resistant sealant a plug is inserted in the end cross-sectional volume of the conduit sleeve. Such a plug may also be combined with the use of the electrically conducting rubber product. It is possible that these plugs are made of heat expandable rubber. The rubber members may be supplied in as a row of rubber members in which the rubber members are parallel next to each other oriented. Connections between two neighbouring rubber members may be formed by the same rubber as the rubber of which the rubber members are formed. Such a "steel" of interconnected tubular and preferably cylindrical rubber members may be applied as interconnected or may be used as a stockage of interconnected tubular, preferably cylindrical, rubber members from which single rubber members can be separated by for instance cutting through the connection between the members. The rubber may be based on an Ethyl-vinyl acetate copolymer.

It should be understood that a transit system according to the invention often has the advantage that in a relatively easy way an extra pipe can be addled. The sealant can easily locally be pierced through and the cross-sectional volume comprises enough pipe-free and rubber-free space for insertion of a new pipe.

Finally, it is pointed out that the word "pipe" also encompasses a pipe-like cable. So, a cable with a stiff outer layer which is often made of a plastic is within the context of this specification also considered to be a pipe.

Also these embodiments and methods are understood to fall within a framework of the invention as defined by the appended claims.

## Claims

1. Transit system (TS) for incorporation in a construction element (P) that divides two compartments (CI, CII), comprising a conduit (CS), and at least one pipe (PP) which extends through the conduit (CS) from one of the two compartments (CI, CII) to the other of the two compartments (CI, CII) and into which heat can be conducted, wherein a substantially endless inner wall (IW) of the conduit defines an inner cross-sectional volume (IV) which is composed of a pipe-free part (UP) that is unoccupied by the at least one pipe and a pipe-occupied part (PP) that is occupied by the at least one pipe (PP), the transit system (TS) further comprising a plurality of similar fire resistant and heat expandable rubber members (RM) with which the pipe-free part (UP) of the inner cross-sectional volume (IV) is filled up, wherein each of the heat expandable rubber members (RM) is made of a heat expandable rubber, wherein each of the heat expandable rubber members (RM) has a tubular shape, wherein each of the at least one of the pipes (PP) extending through the conduit (CS) is free from being coaxially surrounded by a single one of the tubular-shaped rubber members (RM), the tubular rubber members (RM) further being such that the tubular rubber members (RM) together are unable to form in an unexpanded condition a rubber sleeve that narrowly fits to any of the at least one pipe (PP), wherein the at least one pipe (PP) comprises a plurality of pipes (PP) and **characterized in that** the plurality of pipes (PP) comprises at least one metal pipe and at least one plastic pipe.

2. Transit system (TS) according to claim 1, wherein each rubber member (RM) has a rotational position obtainable by rotating that member (RM) around its axis which extends in a longitudinal direction of that member (RM), the rotational position of each member (RM) being independent of any of the neighbouring members of that member (RM).

3. Transit system (TS) according to claim 1 or 2, wherein in the inner cross-sectional volume (IV) a part of an outside of each of the at least one pipe (PP) is along a longitudinal direction free from contact with any of the rubber members (RM).

4. Transit system (TS) according claim 1, wherein in the inner cross-sectional volume (IV) a part of the inner wall (IW) of the conduit sleeve (CS) is along a longitudinal direction free from contact with any of the rubber members (RM).

5. Transit system (TS) according to claim 1 or 4, wherein the rubber members (RM) are such that the rubber members (RM) together are unable to form in an unexpanded condition a rubber lining that closely covers the inner wall (IW) in the inner cross-sectional volume (IV).

6. Transit system (TS) according to any one of the previous claims, wherein at least one of the rubber members (RM) has a cylindrical shape.

7. Transit system (TS) according to any one of the previous claims, wherein the plurality of rubber members (RM) comprise rubber members (RM) which all have the same shape.

8. Transit system (TS) according to any one of the previous claims, wherein the plurality of rubber members (RM) comprise two types of rubber members (RM).

9. Transit system (TS) according to claim 8, wherein a member (RM) of one type and a member (RM) of another type differ in dimensions.

10. Transit system (TS) according to claim 8 or 9, wherein the members (RM) of each type have similar dimensions in longitudinal direction.

11. Transit system (TS) according to any one of the previous claims, wherein at at least one free end of the conduit sleeve (CS) an end cross-sectional volume (EV) is substantially surrounded by the inner wall (IW) of the conduit sleeve (CS) and is filled up with a fire resistant sealant (FS) and/or a watertight sealant.

12. Transit system (TS) according to claim 11, wherein the fire resistant and/or the watertight sealant (FS) is based on a silicone compound.

13. Transit system (TS) according to claim 11 or 12, wherein the end cross sectional volume (EV) has a thickness of about 20 mm for a water- and gas-tight sealing and a thickness of 5-20 mm for only fire rated sealings.

14. Transit system (TS) according to any one of claims 11-13, wherein between the end cross-sectional volume (EV) and between the inner cross-sectional volume (IV) an intermediate cross-sectional volume (BV) is filled up with an electrically conductive plastic and/or rubber product (RP).

15. Transit system (TS) according to any one of the previous claims, wherein the inner cross-sectional volume (IV) has a thickness in a range of 80-160 mm.

16. Transit system (TS) according claim to claim 1, wherein at least one of the rubber members (RM) acts as an element that separates at least two pipes (PP) .

17. Transit system (TS) according to any one of the previous claims, wherein the transit system (TS)is part of an off-shore construction or vessel.

18. Method for providing in a conduit (CS) through which at least one metal pipe and at least one plastic pipe extends and which is incorporated in a compartment-dividing construction element (P), a barrier for resisting propagation of fire through the conduit (C), wherein the method comprises filling up a pipe-free, inner cross-sectional, part (UP,IV) of the conduit (CS) with a plurality of fire resistant and heat expandable rubber members (RM), wherein heat expandable heat expandable rubber members (RM) each of the heat expandable rubber members (RM) has a tubular shape, wherein these tubular members (RM) are substantially randomly distributed in that pipe-free part (UP)of the conduit (CS), so that at least one of the pipes (PP) extending through the conduit (CS) is free from being coaxially surrounded by a single one of the tubular rubber members (RM), each of the tubular members (RM) further being such that the tubular members (RM) together are unable to form in an unexpanded condition a rubber sleeve that narrowly fits to any of the at least one pipe (PP).

## Patentansprüche

1. Durchgangssystem (TS) für das Einbetten in ein Konstruktionselement (P), das zwei Abteilungen (CI, CII) teilt, umfassend einen Kanal (CS) und zumindest ein Rohr (PP), welches sich durch den Kanal (CS) von einem der zwei Abteilungen (CI, CII) zu der anderen der zwei Abteilungen (CI, CII) erstreckt und in welchen Hitze eingeleitet werden kann, bei dem eine im Wesentlichen endlose innere Wand (IW) des Kanals ein inneres Querschnittsvolumen (IV) definiert, welches aus einem rohrfreien Teil (UP) zusammengesetzt ist, der nicht durch das zumindest eine Rohr belegt ist, und einen Rohrbelegteil (PP), der durch das zumindest eine Rohr (PP) belegt ist, wobei das Durchgangssystem (TS) ferner eine Vielzahl von ähnlichen feuerbeständigen und hitzeausdehnbaren Gummielementen (RM) umfasst, mit denen der rohrfreie Teil (UP) des inneren Querschnittsvolumens (IV) ausgefüllt ist, wobei jedes der hitzeausdehnbaren Gummielemente (RM) aus einem hitzeausdehnbaren Gummi hergestellt ist, wobei jedes der hitzeausdehnbaren Gummielemente (RM) eine rohrförmige Gestalt aufweist, wobei jedes des zumindest einen Rohrs (PP), das sich durch den Kanal (CS) erstreckt, koaxial nicht durch ein einzelnes der rohrförmigen Gummielemente (RM) umgeben ist, wobei die rohrförmigen Gummielemente (RM) ferner derart ausgebildet sind, dass die rohrförmigen Gummielemente (RM) zusammen nicht geeignet sind, in einem nicht ausgedehnten Zustand eine Gummihülse auszubilden, die eng an irgendeines des zumindest einen Rohrs (PP) anliegt, wobei das zumindest eine Rohr (PP) eine Vielzahl von Rohren (PP) umfasst, und
**dadurch gekennzeichnet ist, dass**
die Vielzahl von Rohren (PP) zumindest ein Metallrohr und zumindest ein Kunststoffrohr umfassen.

2. Durchgangssystem (TS) nach Anspruch 1, bei dem jedes Gummielement (RM) eine Drehposition aufweist, die durch Drehen des Elements (RM) um seine Achse erhaltbar ist, die sich in einer Längsrichtung des Elements erstreckt, wobei die Drehposition von jedem Element (RM) unabhängig von einem der benachbarten Elemente dieses Elements (RM) ist.

3. Durchgangssystem (TS) nach Anspruch 1 oder 2, bei dem in dem inneren Querschnittsvolumen (IV) ein Teil einer Außenseite von jedem des zumindest einen Rohrs (PP) entlang einer Längsrichtung frei vom Kontakt mit irgendeinem der Gummielemente (RM) ist.

4. Durchgangssystem (TS) nach Anspruch 1, bei dem in dem inneren Querschnittsvolumen (IV) ein Teil der inneren Wand (IW) der Kanalhülse (CS) entlang einer Längsrichtung frei von Kontakt mit irgendeinem der Gummielemente (RM) ist.

5. Durchgangssystem (TS) nach Anspruch 1 oder 4, bei dem die Gummielemente (RM) derart ausgebildet sind, dass die Gummielemente (RM) zusammen nicht geeignet sind, in einem unausgedehnten Zustand eine Gummiauskleidung auszubilden, die eng die innere Wand (IW) in dem inneren Querschnittsvolumen (IV) abdeckt.

6. Durchgangssystem (TS) nach einem der vorhergehenden Ansprüche, bei dem zumindest eines der Gummielemente (RM) eine zylindrische Gestalt aufweist.

7. Durchgangssystem (TS) nach einem der vorhergehenden Ansprüche, bei dem die Vielzahl der Gummielemente (RM) Gummielemente umfassen, welche alle die gleiche Gestalt aufweisen.

8. Durchgangssystem (TS) nach einem der vorhergehenden Ansprüche, bei dem die Vielzahl der Gummielemente (RM) zwei Arten von Gummielementen (RM) umfassen.

9. Durchgangssystem (TS) nach Anspruch 8, bei dem sich ein Element (RM) einer Art und ein Element (RM) einer anderen Art in ihren Dimensionen unterscheiden.

10. Durchgangssystem (TS) nach Anspruch 8 oder 9, bei dem die Elemente (RM) von jeder Art gleiche Dimensionen in Längsrichtung aufweisen.

11. Durchgangssystem (TS) nach einem der vorhergehenden Ansprüche, bei dem an zumindest einem freien Ende der Kanalhülse (CS) ein Endquerschnittsvolumen (EV) im Wesentlichen durch die Wand (IW) der Kanalhülse (CS) umgeben ist und mit einem feuerwiderstandsfähigen Dichtstoff (FS) und/oder einem wasserdichten Dichtstoff ausgefüllt ist.

12. Durchgangssystem (TS) nach Anspruch 11, bei dem der feuerwiderstandsfähige und/oder der wasserdichte Dichtstoff (FS) auf einem Silikonverbundstoff basiert.

13. Durchgangssystem (TS) nach Anspruch 11 oder 12, bei dem das Endquerschnittsvolumen (EV) eine Dicke von etwa 20 mm für einen wasser- und gasdichten Dichtstoff und eine Dicke von 5-20 mm für nur feuerbezogene Dichtstoffe aufweist.

14. Durchgangssystem (TS) nach einem der Ansprüche 11-13, bei dem zwischen dem Endquerschnittsvolumen (EV) und zwischen dem inneren Querschnittsvolumen (IV) ein Zwischenquerschnittsvolumen (BV) mit einem elektrisch leitenden Plastik- und/oder Gummiprodukt (RP) ausgefüllt ist.

15. Durchgangssystem (TS) nach einem der vorhergehenden Ansprüche, bei dem das innere Querschnittsvolumen (IV) eine Dicke in einem Bereich von 80-160 mm aufweist.

16. Durchgangssystem (TS) nach Anspruch 1, bei dem zumindest eines der Gummielemente (RM) als ein Element betrieben ist, das die zumindest zwei Rohre (PP) trennt.

17. Durchgangssystem (TS) nach einem der vorhergehenden Ansprüche, bei dem das Durchgangssystem (TS) Teil einer Hochsee-Konstruktion oder eines Seefahrzeugs ist.

18. Verfahren zum Bereitstellen einer Barriere in einem Kanal (CS), durch den sich zumindest ein Metallrohr und zumindest ein Plastikrohr erstrecken und der in einem Abteil trennenden Konstruktionselement (P) eingebettet ist, zum Widerstehen der Ausbreitung eines Feuers durch den Kanal (C), bei dem das Verfahren das Auffüllen eines rohrfreien inneren Querschnittsteils (UP, IV) des Kanals (CS) mit einer Vielzahl von feuerresistenten und hitzeausdehnbaren Gummielementen (RM) umfasst, bei dem jedes der hitzeausdehnbaren Gummielemente (RM) eine rohrförmige Gestalt aufweist, bei dem diese rohrförmigen Elemente (RM) in dem rohrfreien Teil (UP) des Kanals (CS) im Wesentlichen zufällig verteilt sind, so dass zumindest eines der Rohre (PP), die sich durch den Kanal (CS) erstrecken, nicht koaxialen durch ein einzelnes der rohrförmigen Gummielemente (RM) umgeben ist, wobei jedes der gummiförmigen Elemente (RM) ferner derart ausgebildet ist, dass die rohrförmigen Elemente (RM) zusammen ungeeignet sind, in einem nicht ausgedehnten Zustand eine Gummihülse auszubilden, die eng an irgendeine des zumindest einen Rohrs (PP) anliegt.

## Revendications

1. Système de transit (TS) à incorporer dans un élément de construction (P) qui sépare deux compartiments (CI, CII), comprenant une canalisation (CS) et au moins un tuyau (PP) qui s'étend à travers la canalisation (CS) de l'un des deux compartiments (CI, CII) vers l'autre des deux compartiments (CI, CII) et où de la chaleur peut être conduite, où une paroi interne (IW) essentiellement sans fin de la conduite définit un volume transversal interne (IV) qui est composé d'une partie (UP) sans tuyau qui n'est pas occupée par l'au moins un tuyau et une partie avec tuyau (PP) qui est occupée par l'au moins un tuyau (PP), le système de transit (TS) comprenant en outre une pluralité d'organes en caoutchouc (RM) thermo-expansible et résistants au feu similaires avec lesquels la partie (UP) sans tuyau du volume transversal interne (IV) est remplie, où chacun des organes en caoutchouc (RM) thermo-expansible est réalisé en un caoutchouc thermo-expansible, où chacun des organes en caoutchouc (RM) thermo-expansible a une forme tubulaire, où chacun de l'au moins un des tuyaux (PP) s'étendant à travers la canalisation (CS) ne peut pas être entouré coaxialement par un seul organe des organes en caoutchouc (RM) de forme tubulaire, les organes en caoutchouc (RM) tubulaires étant en outre tels que les organes en caoutchouc (RM) tubulaires soient incapables de former ensemble dans un état non expansé un manchon en caoutchouc qui s'ajuste étroitement à l'un quelconque de l'au moins un tuyau (PP), où l'au moins un tuyau (PP) comprend une pluralité de tuyaux (PP) et **caractérisé en ce que** la pluralité de tuyaux (PP) comprend au moins un tuyau métallique et au moins un tuyau plastique.

2. Système de transit (TS) selon la revendication 1, dans lequel chaque organe en caoutchouc (RM) a une position de rotation pouvant être obtenue en faisant tourner cet organe (RM) autour de son axe qui s'étend dans une direction longitudinale de cet organe (RM), la position de rotation de chaque organe (RM) étant indépendante de l'un quelconque des organes voisins de cet organe (RM).

3. Système de transit (TS) selon la revendication 1 ou 2, dans lequel dans le volume transversal interne (IV) une partie de l'extérieur de chacun de l'au moins un tuyau (PP) se trouve le long d'une direction longitudinale sans contact avec l'un quelconque des organes en caoutchouc (RM) .

4. Système de transit (TS) selon la revendication 1, dans lequel dans le volume transversal interne (IV), une parie de la paroi interne (IW) du manchon de canalisation (CS) se trouve le long d'une direction longitudinale sans contact avec l'un quelconque des organes en caoutchouc (RM).

5. Système de transit (TS) selon la revendication 1 ou 4, dans lequel les organes en caoutchouc (RM) sont tels que les organes en caoutchouc (RM) sont incapables de former ensemble dans un état non expansé un revêtement en caoutchouc qui couvre étroitement la paroi interne (IW) dans le volume transversal interne (IV).

6. Système de transit (TS) selon l'une quelconque des revendications précédentes, dans lequel au moins l'un des organes en caoutchouc (RM) a une forme cylindrique.

7. Système de transit (TS) selon l'une quelconque des revendications précédentes, dans lequel la pluralité d'organes en caoutchouc (RM) comprend des organes en caoutchouc (RM) qui ont tous la même forme.

8. Système de transit (TS) selon l'une quelconque des revendications précédentes, dans lequel la pluralité d'organes en caoutchouc (RM) comprend deux types d'organes en caoutchouc (RM).

9. Système de transit (TS) selon la revendication 8, dans lequel un organe (RM) d'un type et un organe (RM) d'un autre type ont des dimensions différentes.

10. Système de transit (TS) selon la revendication 8 ou 9, dans lequel les organes (RM) de chaque type ont des dimensions similaires dans une direction longitudinale.

11. Système de transit (TS) selon l'une quelconque des revendications précédentes, dans lequel au niveau d'au moins une extrémité libre du manchon de canalisation (CS), un volume transversal d'extrémité (EV) est essentiellement entouré par la paroi interne (IW) du manchon de canalisation (CS) et est rempli d'un élément d'étanchéité (FS) résistant au feu et/ou d'un élément d'étanchéité étanche à l'eau.

12. Système de transit (TS) selon la revendication 11, dans lequel l'élément d'étanchéité résistant au feu et/ou étanche à l'eau (FS) est à base d'un composant en silicone.

13. Système de transit (TS) selon la revendication 11 ou 12, dans lequel le volume transversal d'extrémité (EV) a une épaisseur de 20 mm environ pour une étanchéité au gaz et à l'eau et une épaisseur de 5 à 20 mm pour des joints résistants au feu uniquement.

14. Système de transit (TS) selon l'une quelconque des revendications 11 à 13, dans lequel entre le volume transversal d'extrémité (EV) et le volume transversal interne (IV), un volume transversal intermédiaire (BV) est rempli d'un produit en caoutchouc (RP) et/ou en plastique électriquement conducteur.

15. Système de transit (TS) selon l'une quelconque des revendications précédentes, dans lequel le volume transversal interne (IV) a une épaisseur se trouvant dans une plage de 80 à 160 mm.

16. Système de transit (TS) selon la revendication 1, dans lequel au moins l'un des organes en caoutchouc (RM) agit en tant qu'élément qui sépare au moins deux tuyaux (PP).

17. Système de transit (TS) selon l'une quelconque des revendications précédentes, dans lequel le système de transit (TS) est une partie d'une construction en mer ou d'un navire.

18. Procédé destiné à fournir dans une canalisation (CS) à travers laquelle au moins un tuyau métallique et au moins un tuyau plastique s'étendent et qui est incorporée dans un élément (P) de construction de séparation de compartiments, une barrière pour résister à la propagation du feu à travers la canalisation (C), où le procédé comprend le fait de remplir une partie (UP, IV) transversale interne, sans tuyau de la canalisation (CS) avec une pluralité d'organes en caoutchouc (RM) thermo-expansible et résistants au feu, où chacun des organes en caoutchouc (RM) thermo-expansible a une forme tubulaire, où ces organes tubulaires (RM) sont essentiellement distribués de manière aléatoire dans la partie sans tuyau (UP) de la canalisation (CS), de sorte qu'au moins l'un des tuyaux (PP) s'étendant à travers la canalisation (CS) ne soit pas coaxialement entouré par un seul organe des organes en caoutchouc (RM) tubulaires, chacun des organes tubulaires (RM) étant en outre tel que les organes tubulaires (RM) sont incapables de former ensemble dans un état non expansé un manchon en caoutchouc qui s'ajuste étroitement à l'un quelconque de l'au moins un tuyau (PP).
